# EUROPEAN PATENT SPECIFICATION

(11) **EP 2 669 340 B1**
(45) Date of publication and mention of the grant of the patent: **02.05.2018**
(21) Application number: 13170141.9
(22) Date of filing: 31.05.2013
(51) Int. Cl.: G01L 1/24, C09D 5/22, C09D 183/04, C08G 77/58

(54) **An improved binary pressure sensitive paint coating**
Verbesserter binärer druckempfindlicher Anstrich
Revêtement amélioré de peinture sensible à la pression binaire

(30) Priority: 01.06.2012 IN 1687DE2012
(43) Date of publication of application: 04.12.2013
(73) Proprietor: Council of Scientific and Industrial Research, New Delhi - 110 001 (IN)
(72) Inventor: Basu, Bharathibai Jyothi, 560017 Bangalore (IN); Lakshmi, Ramachandrappa Vara, 560017 Bangalore (IN); Raju, Channa, 560017 Bangalore (IN); Sathianarayanan, Arunachalapandian, 560017 Bangalore (IN); Venkatakrishnan, Lakshmi, 560017 Bangalore (IN)
(74) Representative: J A Kemp

(56) References cited:
- EP-A1- 1 715 317
- EP-A2- 0 417 535
- WO-A1-96/41142
- WO-A1-2011/018355
- BASU B J ET AL: "A novel pyrene-based binary pressure sensitive paint with low temperature coefficient and improved stability", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 138, no. 1, 24 April 2009 (2009-04-24), pages 283-288, XP026033840, ISSN: 0925-4005, DOI: 10.1016/J.SNB.2009.02.029 [retrieved on 2009-02-24]
- "ELASTOSIL E43 TRANSPARENT: Safety Data Sheet (1907/2006/EC)", , 5 July 2013 (2013-07-05), pages 1-9, XP055076835, München Retrieved from the Internet: URL:http://sdb.wacker.com/pf/e/result/repo rt.jsp?P_LANGU=E&P_SYS=2&P_SSN=3733&P_REP= 00000000000000000044&P_RES=17871&P_SPEC=R [retrieved on 2013-08-28]
- COLAS A: "Silicone Chemistry Overview", INTERNET CITATION, 1997, pages 1-10, XP002482169, Retrieved from the Internet: URL:http://www.dowcorning.com/content/publ ishedlit/51-960A-01.pdf [retrieved on 2008-05-29]

## Description

### Field of Invention

The present invention relates to an improved binary pressure sensitive paint (PSP) coating suitable for wind tunnel studies in both transonic and supersonic flows and also for application on large area models. In particular, the present invention relates to an improved binary PSP coating having improved adhesion and enhanced shelf-life that is useful for accurately measuring pressure changes at the surface of an aerodynamic model during wind tunnel testing under transonic flows and supersonic flow conditions and also can be used over larger areas of model surfaces.

### Background of Invention and Description of the Prior Art

Reference may be made to US patent publication no. 2006/0160241 A1, titled Dual luminophor compositions and related methods, wherein dual luminophor compositions include a first luminescent compound having a luminescent emission that is sensitive to oxygen concentration, a second luminescent compound having a luminescent emission that is insensitive to oxygen concentration, an oxygen permeable host material, and a method for measuring pressure of an oxygen-containing fluid dual luminophor compositions. It may be noted that the luminophores and the oxygen permeable host material used are different from that of the present invention.

Reference may be made to US patent no. 7176272 B2, titled Pressure sensitive material, wherein an optically detectable response is generated to changes in pressure and the material includes an elastomer, a polyacrylate and a silicone in combination with a photochemical system. The photochemical system may be in the form of an exciplex or a fluorescence energy transfer, which are reversible processes based on a totally different approach as compared to that of the present invention.

Reference may be made to Indian Patent Application No. 2337/DEL/2005, wherein white epoxy base coat was used as screen layer on which the binary paint was sprayed by using the spray gun. This this epoxy screen layer needs curing by way of heating the coated model at 60°C for 1 to 2 hours. However, heating to cure the screen layer may not be possible for most of the models having large surface area, particularly for models embedded with sensitive kulites. It was found later that the PSP characteristics were affected if the curing of epoxy base coat was incomplete leading to decrease in pressure sensitivity of the PSP coating. Further, the pressure sensitivity of such coatings also decreased gradually with time. It is important that the pressure sensitivity of the coating should remain nearly constant at least for one month for good PSP performance. It was observed that diffusion of certain ingredients from the epoxy screen layer to the active layer was the main cause for the degradation in pressure sensitivity with time.

Basu et al., Sensors and Actuators B: Chemical, 138 (2009), pp. 283-288 discusses pyrene-based pressure sensitive paints in which pyrene is covalently bonded to a polymer binder.

EP 0 417 535 discusses an optical oxygen sensor comprising pyrene derivatives as oxygen indicators or donors.

Thus, keeping in purview the hitherto reported prior art, the inventors of the present invention realized that there exists a dire need to provide a stable binary pressure sensitive paint coating with improved adhesion and enhanced shelf-life for pressure sensitive coatings, suitable for application over large areas, useful for surface pressure mapping of wind tunnel models.

The present invention therefore provides a stable binary PSP coating with improved adhesion and enhanced shelf-life for the air pressure sensor coating suitable for application over larger areas on the model surface. In the present invention, screen layer of epoxy base coat has been replaced with silicone-titanium dioxide and silicon primer is introduced as adhesive layer. Adhesive layer is placed between the substrate and screen layer; screen layer and the active layer of PSP. The advantages of using a silicone based screen layer are to avoid the use of epoxy paint and heat treatment as well as to avoid the adverse effects of the possible interaction between epoxy screen layer and the active layer. Also new silicone-titanium dioxide screen layer can be cured under ambient conditions.

### Objects of the Invention

The subject-matter of the present invention is defined in claims 1-5 as attached.

The main object of the present invention is thus to provide an improved binary pressure sensitive paint (PSP) coating. Further disclosed is a process for preparing the same, which obviates the drawbacks of the hitherto known prior art as detailed above.

Another object of the present disclosure is to provide a composition of a pyrene-based binary PSP coating that is free from paint degradation problems commonly associated with conventional pyrene-based pressure sensitive paint coatings.

Yet another object of the present disclosure is to provide a method for preparing a pyrene end-labeled polydimethylsiloxane by reacting a pyrene derivative with a silanol terminated poly dimethyl siloxane resin in the presence of an organo functional / silicone functional silane coupling agent.

Still another object of the present disclosure is to provide an improved binary PSP coating that incorporates a reference luminophore, which is an oxysulfide of rare earth elements that can correct for variations in excitation intensity over the model surface and also for errors due to temperature sensitivity of the paint.

Yet another object of the present disclosure is to provide an improved binary pressure sensitive paint (PSP) coating having enhanced adhesion, and improved shelf-life for the pressure sensor coating.

Still another object of the present disclosure is to provide a new silicone based screen layer for models which need not be subjected to any heat treatment, which is also solvent resistant, and helps in getting consistent paint properties for the binary PSP coating of the present invention.

### Summary of the Invention

The present invention is directed to a stable binary pressure sensitive paint coating having improved adhesion and enhanced shelf-life suitable for application over large surface areas. Also disclosed herein is a simple process for modifying the screen layer and adhesive layer, which is helpful in getting consistent paint properties for the binary pressure sensitive paint coating of the present invention.

Thus, the present invention provides a binary pressure sensitive paint coating comprising a stack of layers consisting of a screen layer, an active layer and two adhesive layers, wherein the said first adhesive layer being deposited on the model surface followed by deposition of silicone-titanium dioxide screen layer on the said first adhesive layer, the second adhesive layer being deposited on the said screen layer followed by the deposition of active layer comprising pyrene-end-labelled PDMS on the said second adhesive layer, wherein the said layers being subjected to curing at temperature of 25 to 40°C for a period of 24 to 72 hours, wherein the pyrene end-labelled PDMS is derived from a hydroxyl substituted pyrene of formula py-(CH₂)ₙ-OH, wherein py is pyrene and n is from 1 to 10.

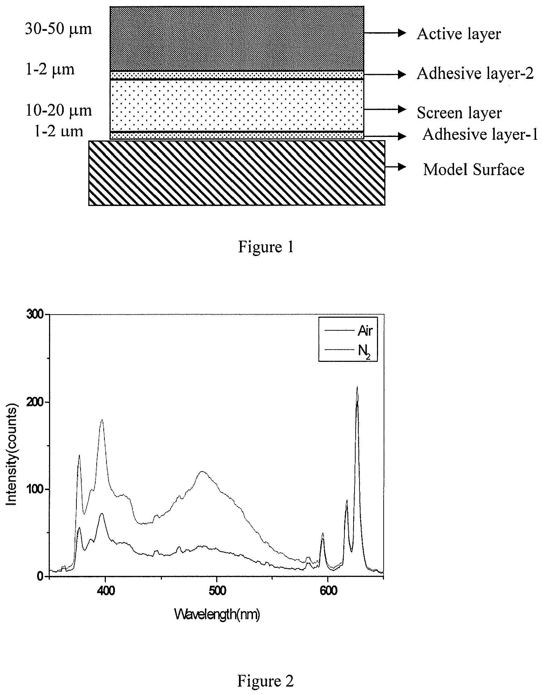

The pressure sensitive paint coating of the present invention consists mainly of two layers (i) screen layer, and (ii) active layer as shown in Figure 1 of the drawings accompanying this specification. Silicone-titanium dioxide has been used for screen layer and silicon primer for adhesive layer. A thin adhesive layer of thickness about 1 to 2 µm is applied with a soft cloth on the model surface so that the screen layer will have good adhesion to the substrate. Typically, the thickness of screen layer is in the range of 10 to 20 µm. Another thin adhesive layer of thickness about 1 to 2 µm is applied on the screen layer before applying the active layer to ensure adhesion between the screen layer and the active layer. The topcoat is the pressure sensitive layer, often termed as the active layer having thickness of about 30 to 50 µm. The adhesive layer is cured for 24 hours to improve its solvent resistance. These modifications in the screen layer and adhesive layer are helpful in improving the paint performance and getting consistent results in the present invention.

By using a pyrene end-labelled PDMS derived from a hydroxyl substituted pyrene of formula py-(CH₂)ₙ-OH, wherein py is pyrene and n is from 1 to 10, the present invention provides a stable binary pressure sensitive paint coating having pressure sensitivity in the range of 60 to 70 %/bar, temperature coefficient in the range of 0.30 to 0.50 %/°C thermal stability up to 60°C, good adhesion and enhanced shelf-life, which is ideally suitable for getting accurate surface pressure data in transonic and supersonic flow applications over larger areas of model surfaces.

The aforesaid features of the present invention have been achieved by adopting the following inventive steps:
1. Replacing the epoxy screen layers as reported in the prior arts with a silicone - titanium dioxide screen layer cured at temperature of 25 to 40 °C for a period of 24 to 72 hours.
2. Introducing an adhesive layer between the model surface and screen layer and another adhesive layer between the screen layer and active layer for improving the adhesion of the active layer to screen layer.
3. Removal of excess dichloromethane from the paint mixture by evaporation under magnetic stirring at controlled temperature of 30 ± 5°C before mixing with other ingredients.

Accordingly, the present invention provides an improved binary PSP coating comprising a stack of layers consisting of a screen layer, an active layer and two adhesive layers, wherein the said first adhesive layer being deposited on the model surface followed by deposition of silicone-titanium dioxide screen layer on the first adhesive layer, the second adhesive layer being deposited on the said screen layer followed by deposition of active layer on the second adhesive layer, wherein the said layers being subjected to curing at temperature of 25 to 40 °C for a period of 24 to 72 hours in order to provide stable binary pressure sensitive paint coating having good pressure sensitivity in the range of 60 to 70 %/bar, temperature coefficient in the range of 0.30 to 0.50 %/°C, thermal stability up to 60°C, improved adhesion and enhanced shelf-life.

In an embodiment of the present invention, a commercially available silicone primer is applied as adhesive layers and the thickness of adhesive layers is about 1 to 2 µm.

In another embodiment of the present invention, the thickness of the screen layer and active layer are in the range of 10 to 20 µm and 30 to 50 µm respectively.

In still another embodiment of the present invention, the improved binary PSP coating has enhanced adhesion in transonic and supersonic flows and improved shelf life of 2 months and high pressure sensitivity in the range of 60 to 70 %/bar, thermal stability up to 60°C and low temperature coefficient in the range of 0.30 to 0.50 %/°C.

In yet another embodiment of the present invention, the new screen layer consists of a mixture of silicone resin and commercial titanium dioxide pigment in suitable proportions, mixed well with a solvent like toluene and applied on the substrate/model surface by spraying.

In still another embodiment, the improved binary PSP coating of the present invention is suitable for application over large areas on the model surface.

The present invention provides a binary pressure sensitive paint coating comprising a stack of layers consisting of a screen layer, an active layer and two adhesive layers, said coating being obtainable by a first adhesive layer being deposited on a model surface followed by deposition of a silicone-titanium dioxide screen layer on the said first adhesive layer, a second adhesive layer being deposited on the said screen layer followed by deposition of active layer on the said second adhesive layer, with the said layers being subjected to curing at temperature of 25 to 40°C for a period of 24 to 72 hours in order to provide the binary pressure sensitive paint coating, said coating having pressure sensitivity in the range of 60 to 70 %/bar, temperature coefficient in the range of 0.30 to 0.50 %/°C and thermal stability up to 60°C.

The silicone-titanium dioxide screen layer preferably comprises (and typically is, or consists essentially of) a mixture of silicone resin and titanium dioxide, typically a homogenous mixture. The ratio of silicone resin to titanium dioxide in the mixture is preferably X:1 wherein X is from 2 to 4, typically around 3.

### Brief Description of the Accompanying Drawings

The present invention is illustrated in Figures 1 to 9 of the drawing(s) accompanying this specification.
Figure 1 represents schematic diagram of different layers of the pressure sensitive paint (PSP) coating of the present invention.
Figure 2 shows fluorescence spectra of the binary PSP coating of present invention in the presence of air and nitrogen.
Figure 3 shows the effect of air pressure on the blue and red intensity of the binary PSP coating of present invention.
Figure 4 shows calibration graph of the binary PSP coating of present invention at T = 25°C in the pressure range of 0.10 to 1.60 bar.
Figure 5 shows the effect of temperature on the normalized intensity of the binary PSP coating of present invention at P = 1 bar.
Figure 6 shows comparison of the calibration graphs of the binary PSP coating of present invention before and after thermal aging test at 60°C and 0.1 bar.
Figure 7 shows normalized intensity ratio image of the PSP coating of present invention on the model after 50 blow downs in the wind tunnel. A paint coupon embedded on the model surface for comparison of paint calibration can be seen.
Figure 8 shows comparison of the calibration graphs of the binary PSP coating of present invention before and after wind tunnel aging test.
Figure 9 shows the effect of shelf-life on the calibration graphs of the binary PSP coating of present invention.

### Detailed Description of the Invention

As stated earlier, the present invention relates to an improved binary pressure sensitive paint (PSP) coating which is suitable for wind tunnel studies in both transonic and supersonic flows. It provides a stable binary pressure sensitive paint coating with improved adhesion and enhanced shelf-life in both transonic and supersonic flows.

It is pertinent to mention here that the pressure sensitivity of the coatings reported so far decrease gradually with time due to the slow interactions between the diffused epoxy functional groups of epoxy paint screen layer with the reactive functional groups of active layer resulting in increased cross linking, thereby causing decreased oxygen permeability and decreased pressure sensitivity for the active layer. It is required that the pressure sensitivity of the coating should remain nearly constant for one month for good paint performance. The inventors of the present investigation demonstrated that direct contact of active layer with the epoxy screen layer caused gradual degradation in pressure sensitivity of the binary PSP coating with time resulting in poor shelf-life of the PSP coating.

Therefore, in the present invention, the silicone-titanium dioxide mixture cured at a temperature of 25 to 40°C for a period of 24 to 72 hours is used as the screen layer to replace the vulnerable epoxy white base coat. To have sufficient adhesion between the layers of coating, silicone primer is used as adhesive layer on the model surface and also between the screen layer and the active layer. These changes have enhanced shelf life of the PSP coating to 2 months. The replacement of the problematic epoxy screen layer with the silicone screen layer is also helpful for enhancing the adhesion and improving the paint performance and shelf-life for the present invention. Present invention also provides a solution to non-compatibility of heating of certain coated models, particularly for models embedded with sensitive kulites. The replacement of the problematic epoxy screen layer with a silicone screen layer is also helpful for improving the paint performance and enhanced shelf-life for the present invention. Thus, the present invention provides a novel binary paint coating having a rare combination of enhanced adhesion, reasonably high pressure sensitivity, low temperature coefficient and good stability, which is ideally suitable for getting accurate surface pressure data in transonic and supersonic flow applications.

The method of preparation of the active layer of the binary PSP formulation of the present invention comprises of mixing the pyrene end-labeled Polydimethylsiloxane [PDMS] solution with a two-part room temperature vulcanizable (RTV) silicone resin (RTV 11 from M/s Momentive Performance Materials), dibutyl tin dilaurate (DBT) as catalyst, and a europium-doped rare earth oxysulfide as reference luminophore. Toluene was used as solvent to dilute the paint mixture.

The present invention provides a fluorescent pyrene derivative end-labeled and immobilized in a polydimethylsiloxane (PDMS) resin. The method of preparation of pyrene end-labeled PDMS resin involves reacting a solution of pyrene derivative in dichloromethane with a silanol terminated PDMS resin (molecular weight in the range of 400 to 26,000) and silane coupling agent in the presence of a catalyst (stannous 2-ethyl-hexanoate) under ambient conditions. The derivative of pyrene used in the present invention is a hydroxyl substituted pyrene with generic formula, py - (CH₂)ₙ - OH where py is pyrene and n is in the range of 1 to 10. Pyrene derivatives with other functional groups like amine and carboxylic acid could not be used as the resulting PSP compositions would not have the desired PSP properties. The reaction conditions are favorable for the complete conversion of pyrene butanol to pyrene end-labeled PDMS. This solution containing pyrene end-labeled PDMS if stored out of contact with air and humidity is stable for about one month.

The method of preparation of pyrene end-labeled PDMS resin to use as active layer in present invention involves the following steps:
(A) Reacting a solution of pyrene derivative in dichloromethane with silane coupling agent to form a urethane adduct and coupling the said urethane adduct to silanol terminated poly dimethyl siloxane (PDMS) in the presence of a catalyst stannous 2-ethyl-hexanoate under constant stirring for a period in the range of 3 to 4 hours, at temperature of 25 to 35°C, to obtain pyrene end-labeled PDMS.
(B) Mixing the said pyrene end-labeled PDMS obtained in step (A) with two part, condensation cure, room temperature vulcanizable (RTV) silicone resin in the presence of catalyst dibutyl tin dilaurate and adding europium-doped rare earth oxysulfide to the resultant mixture to obtain the active layer paint mixture.
(C) Replacing the epoxy screen layer with a silicone - titanium dioxide screen layer and Introducing an adhesive layer between the model surface and screen layer and another adhesive layer between the screen layer and active layer for improving the adhesion of the active layer to screen layer.
(D) Removing excess dichloromethane in the paint mixture by evaporation at controlled temperature of 30 ± 5°C.

The molecular weight of silanol terminated PDMS resin used in the present invention is in the range of 400 to 26,000. Other PDMS resins with higher or lower molecular weight yield products with lower pressure sensitivity and poor stability. The molecular weight of the silanol terminated PDMS resin is a key factor affecting the pressure sensitivity and stability of the PSP coating. The other important factors, which affect the pressure sensitivity of the PSP coating are the weight ratio of silanol terminated PDMS resin to pyrene derivative, the weight ratio of silane coupling agent to pyrene derivative, and the amount of catalyst, stannous 2-ethyl-hexanoate. The weight ratio of silane-coupling agent to pyrene derivative should be in the range of 5 to 10 and the weight ratio of silanol terminated PDMS resin to pyrene derivative should be in the range of 50 to 200. The concentration of stannous 2-ethyl-hexanoate used as catalyst for the preparation of pyrene-end labeled PDMS should be in the range of 0.20% to 0.40%.

In order to improve the mechanical properties of the PSP coating and also to obtain faster curing at room temperature, the pyrene end-labeled PDMS is mixed with a two part, room temperature vulcanizable (RTV) silicone resin and required amount of dibutyl tin dilaurate (DBT) and sprayed as a thin coating. It is important that the PSP coating after spraying should cure at room temperature to produce a smooth tack-free coating with good adhesion to the substrate. The weight ratio of silicone resin to total silanol terminated PDMS resin including pyrene end-labeled PDMS is critical to obtain complete curing of the PSP coating at room temperature and should be in the range of 0.5 to 5.0. If the ratio is less than 0.5, the PSP coating may be tacky and if the ratio is higher than 5.0, the fluorescent emission intensity will be low, which will result in poor signal to noise ratio. The concentration of catalyst dibutyl tin dilaurate used for the polymerization of silicone is in the range of 0.20% to 0.40%. During the curing of the paint, the alkoxy groups on the pyrene end-labeled PDMS condense with the functional group on the RTV silicone resin and copolymerization takes place thus immobilizing pyrene to the silicone polymer. The binary PSP coating of the present invention exhibits good stability. Since the active pressure sensitive luminophore molecules are chemically attached by a covalent bond to the polymer binder, the luminophore molecules are retained in the polymer thus preventing paint degradation.

The present invention uses a reference luminophore, which is an oxysulfide of rare earth elements doped with europium. It is not sensitive to the pressure and can be used to correct for the excitation intensity variations during the test. It emits phosphorescence and the emission is centered at about 625 nm. The efficiency of phosphorescence emission from this red phosphor was high. The temperature coefficient of this reference luminophore cancels the temperature coefficient of the pyrene end-labeled silicone polymer thereby resulting in a binary PSP coating with low temperature coefficient. The concentration of reference luminophore in the paint formulation is in the range of 2.0 to 4.0 %.

Preparation of binary pressure sensitive paint coating of present invention involves the following steps:
1. cleaning of model surface;
2. deposition of silicone primer adhesive layer on model surface;
3. deposition of silicone resin - titanium dioxide screen layer on the said adhesive layer;
4. deposition of second adhesive layer on the said screen layer; and
5. deposition of PSP active layer on the said second adhesive layer.

The method of application of paint coating on model and coupons comprises spraying the screen layer and active layer on the test surface and the coupons (aluminum strips 15 cm x 5cm with a thickness of about 0.30 mm) after applying the adhesive layer. The model and coupons were cleaned with acetone or a cleaning agent containing a mixture of acetone, xylene and butyl acetate, followed by applying a commercially available silicone primer (SS 4044 from M/s Momentive Performance Materials) as adhesive layer on the model surface and coupons using cotton or soft cloth, cured at temperature of 25 to 40°C for a period of 24 to 72 hours. Silicone screen layer was prepared by mixing silicone resin and commercial titanium dioxide (3:1 weight ratio), mixed well with suitable amounts of toluene using a glass rod and a camel hair brush for homogeneous mixing and applied on the substrate/model surface by spraying. After curing the silicone resin - titanium dioxide mixture at temperature of 25 to 40°C for a period of 24 to 72 hours, silicone primer (SS 4044) was applied over the screen layer using cotton, cured at room temperature for 24 hours. The advantages of using a silicone based screen layer are to avoid the use of epoxy paint and heat treatment.

The binary PSP coating prepared as described earlier was sprayed on the coupons or model surface pre-coated with the silicone resin - titanium dioxide as screen layer and silicone primer as adhesive layer. After curing the PSP coating at temperature of 25 to 40°C for a period of 24 to 72 hours, the coupons were cut into 5 cm X 3 cm size. A small amount of talc was applied on the surface of the coating to protect it from dust particles during wind tunnel testing. The total thickness of the binary PSP coating including screen layer and adhesive layer and active layer was in the range of 40 to 70 µm. The PSP coupons were used for calibration of the paint, determination of temperature coefficient and for carrying out thermal aging test. The binary PSP coating sprayed on models was used for carrying out wind tunnel aging test.

The binary PSP coatings reported earlier were suitable for application over a surface area of < 400 cm². To apply PSP coating on large areas of 1000 cm² and more, proportionally larger quantities of ingredients have to be mixed which would contain proportionally larger volumes of solvents like dichloromethane and toluene. The excess dichloromethane, being an aggressive solvent would attack the epoxy screen layer of the previous invention which would result in nonlinearity of calibration with decrease in pressure sensitivity of the PSP coating. Another disadvantage is that the excess solvent decreases the viscosity of paint mixture and the paint flows after spraying on complex nonplanar models. In the binary PSP coating of the present invention, excess dichloromethane is removed by evaporation under magnetic stirring at controlled temperature of 30 ± 5°C before mixing with other ingredients. This step of removal of dichloromethane from the PSP before mixing and spraying is found to be essential in getting consistent results of paint properties for large areas of model surface.

The experimental setup for recording the fluorescence spectra of the binary PSP coating of present invention consisted mainly of a Fiber optic spectrometer, model S2000 from M/s Ocean Optics, Inc, USA with a 300W Xenon arc lamp (model no. 6258 from Oriel Instruments) as excitation source. The infrared radiation from the xenon lamp was filtered by means of a water filter. Excitation light in the ultraviolet range 335 ± 5 nm was provided by using interference filter, Melles Griot, no. 03FIM026 which was capable of simultaneously exciting both luminophores in the PSP coating. The sample chamber had provision for passing nitrogen and mixtures of air and nitrogen through it while recording the spectra. The fluorescence emission spectra of the binary PSP coating of present invention is shown in Figure 2 of the drawings accompanying this specification.

The experimental setup for the calibration of the binary PSP coupon of present invention consisted mainly of an excitation source, calibration chamber and detector. Excitation light was provided by a pulsed xenon source filtered in the ultraviolet range 335 ± 5 nm which was capable of simultaneously exciting both luminophores in the paint coating. The pressure inside the calibration chamber was varied from 0.10 bar to 1.60 bar in steps of 0.10 bar and temperature was varied from 10°C to 35°C. Two peltier-cooled scientific grade 12-bit CCD cameras with resolution of 1280 x 1024 pixels and equipped with suitable filters were used as detectors to acquire images of the blue and red emission from the coating. The data analysis was done by dedicated software of the NAL PSP System.

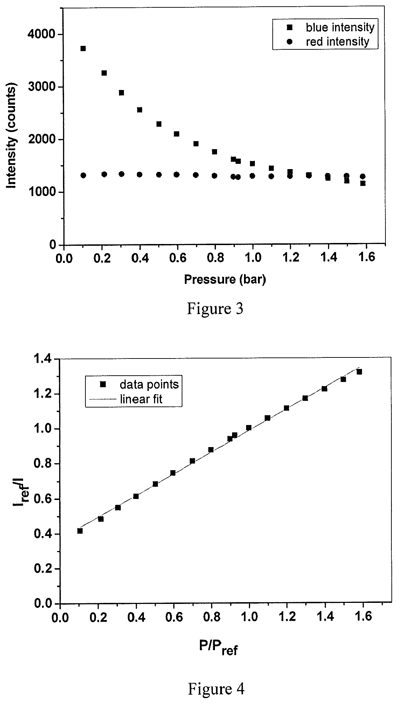

The method of preparation of the Stern-Volmer calibration graph of PSP coating is described herein. The excitation radiation from the source was focused on the PSP coating. The CCD cameras detected the brightness of the light emitted by the PSP coating. Then the coating was made to experience a pressure change in the range of 0.10 to 1.60 bar in steps of 0.10 bar at a constant temperature of 25°C. Measurement of the brightness of light emitted by the coating was taken during each pressure change and emission intensity images from the coating in blue region (450 to 550 nm) and red region (600 to 650nm) were recorded using two CCD cameras with appropriate filters. A plot of blue and red intensity of the binary paint versus pressure is depicted in Figure 3 of the drawings accompanying this specification. It can be seen that blue intensity decreased with increase in air pressure whereas red intensity was independent of pressure and remained constant. The normalized intensity, I was determined by taking the ratio of blue and red intensity at each pressure value. Then the ratio of normalized intensity, I_{ref}/I was calculated where I_{ref} is the normalized intensity at the reference pressure. P = 1 bar was taken as the reference pressure, p_{ref}. The Stern-Volmer calibration graph was prepared by plotting I_{ref}/I versus the normalized pressure, p/p_{ref}. The PSP software provided with the PSP System normalized the blue to red intensity ratio with reference to that at P = 1 bar and plotted the calibration graph. The Stern-Volmer calibration plot of the binary PSP coating of present invention at 25°C in the pressure range of 0.10 to 1.60 bar is shown in Figure 4 of the drawings accompanying this specification. The pressure sensitivity of the binary PSP coating was obtained from the slope of the linear fit of the calibration graph at 25°C (slope = 0.63 is equivalent to a pressure sensitivity of 63%/bar). If the calibration graph shows non-linearity, a polynomial of second degree is used to match the data points and the pressure sensitivity is obtained from the first and second coefficients of the polynomial fit.

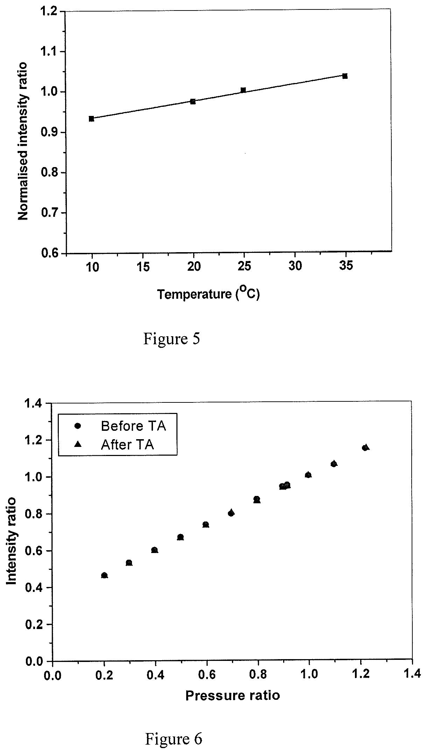

The method of determination of temperature coefficient of the PSP coating comprised of measuring the brightness of blue and red light emitted by the PSP coating at temperatures, 10, 20, 25 and 35°C at P = 1 bar. The measurements were made after equilibrating the coating for a period of 5 minutes at each temperature. The intensity ratio of blue to red emission (I_{blue}/I_{red}) was determined at each temperature value. The intensity ratio was normalized with reference to the intensity ratio at the reference temperature (25°C). The plot of normalized intensity ratio as a function of temperature at P = 1 bar is illustrated in Figure 5 of the drawings accompanying this specification. It can be seen that the temperature coefficient is 0.40 %/°C.

The paint stability was assessed through a static thermal aging (TA) test. The coupons were calibrated and then subjected to a temperature of 60°C for 1 hour in a vacuum oven and calibrated again. The intensity and pressure sensitivity of the coupons before and after thermal aging test were compared. It was observed that the change in normalized intensity after thermal aging test was less than 5%. There was no change in pressure sensitivity after thermal aging test as shown in Figure 6 of the drawings accompanying this specification.

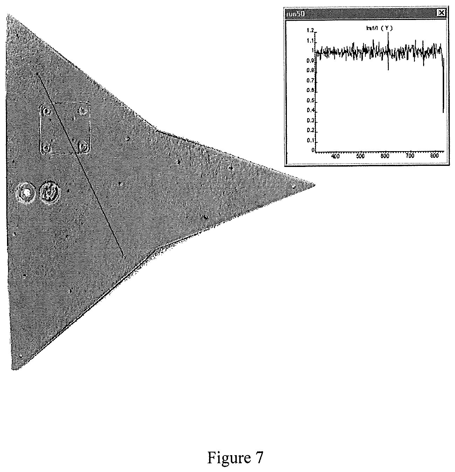

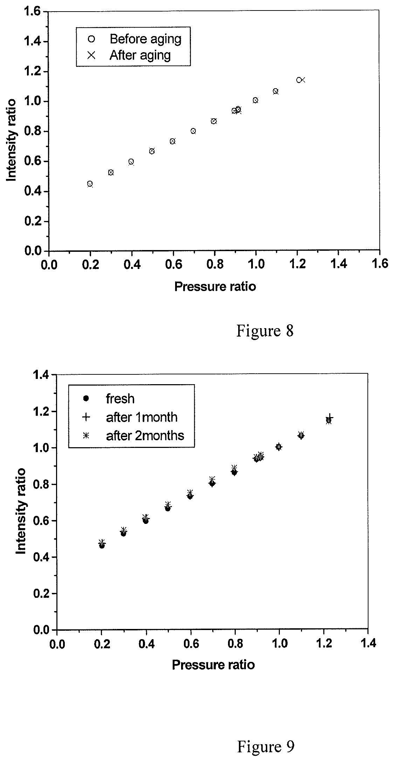

The paint stability was further assessed through wind tunnel aging test. The methodology utilized for wind tunnel aging test comprised of comparing the wind-off images of both blue and red emissions at ambient conditions with those obtained after the first blowdown. Paint was spray-coated on delta wing models and aging test of the paint coating was conducted in the 0.3m-trisonic blowdown wind tunnel at a Mach number of 0.8 and a model incidence, α of 10°. Each blowdown was of approximately 25 s duration. The blue and red images were acquired at the end of 5 blowdowns and continued up to 50 blowdowns. The normalized intensity maps of the blue images after 5 to 50 blowdowns are compared with the image obtained after the first blowdown are shown in Figure 7 of the drawings accompanying this specification. A comparison of the intensity maps showed no degradation for the paint up to 50 blowdowns. There was no change in pressure sensitivity after thermal aging test as shown in Figure 8 of the drawings accompanying this specification. There was no visible mechanical damage to the paint surface due to blowdowns thus showing that the coating has good adhesion and required hardness.

In order to assess the shelf-life of the paint coating, the paint coupon was calibrated at regular intervals. The calibration graphs of a fresh paint coupon and calibrations after one month and two months are shown in Figure 9 of the drawings accompanying this specification. There was only negligible change in the pressure sensitivity of the paint coating after 2 months as compared to that of the fresh coupon. The improvement in shelf-life of the coating was obtained because the epoxy screen layer was substituted with the new silicone - titanium dioxide screen layer.

As detailed herein above, the present invention provides an improved binary PSP coating which can be sprayed to produce a uniform coating with desired PSP characteristics like reasonably high pressure sensitivity, low temperature coefficient and good stability under wind tunnel test conditions. Binary PSP coating of the present invention prevents degradation of fluorescent intensity due to luminophore loss by diffusion and sublimation. The present invention also provides binary PSP coatings having improved adhesion and enhanced shelf-life.

### EXAMPLES

*The following examples are given by way of illustration and therefore should not be construed to limit the scope of the present invention.*

### Example -1

### This example illustrates the preparation and application of the new silicone-titanium dioxide screen layer coating.

The model surface was cleaned with cleaning solvent containing 40 ml xylene, 30 ml acetone and 30 ml n-butyl acetate. Silicone primer (SS 4044) was applied using cotton over the model surface, cured at temperature of 30°C for 24 hours. 3.0 g silicone resin (RTV 11) was mixed with 1.0 g titanium dioxide and 10 ml toluene, stirred well with a glass rod for 10 minutes and mixed well with a camel hair brush to obtain a homogenous mixture. The mixture was filtered through a clean cloth into a spray gun and sprayed the mixture on the surface pre-coated with silicone primer. This quantity was sufficient to prepare a coating of 10 to 20 µm thickness over an area of 600 cm². The coating was allowed to cure at temperature of 30°C for 24 hours. Applied silicone primer (SS 4044) using cotton over the dry screen layer, cured at temperature of 30°C for 24 hours.

### Example- 2

### This example illustrates the preparation of a pyrene-end-labeled PDMS for the active laver.

0.08 g of pyrene butanol was weighed into a 100 ml conical flask and dissolved in 20 ml AR dichloromethane. 0.06 g of stannous 2-ethyl-hexanoate was added to the solution while stirring. The flask was covered with a rubber septum and the solution was stirred magnetically. 0.60 g silane coupling agent and 10.0 g silanol terminated PDMS resin of molecular weight 1500 were transferred in drops to the solution while stirring over a period of 30 minutes. The solution was stirred further for 3 hours at temperature of 30°C to complete the reaction and to obtain pyrene-end-labeled PDMS. The solution was transferred to a dry reagent bottle and made up to 50 ml with AR toluene. The bottle was sealed and stored in a desiccator.

### Example- 3

### This example describes the preparation of the binary pressure sensitive paint formulation for large area application

50 ml solution of pyrene-end-labeled PDMS as prepared in Example-2 was evaporated at controlled temperature of 30 ± 5°C under magnetic stirring till the volume was reduced to about 40 ml. 14.4 g RTV silicone resin was added to it and mixed well to obtain a homogenous mixture. 3.6 g red phosphor (yttrium oxysulfide doped with europium) was added and mixed well. Finally, 1.0 g dibutyl tin dilaurate was added and mixed well for about 10 min before spraying.

### Example- 4

### This example describes the preparation of binary pressure sensitive paint coating

The coating on the model and paint coupons were applied by spraying the paint mixture described in Example 3 on the prepared model or aluminum sheet pre-coated with the white screen layer as described in Example 1 using a spray gun and compressed air with air pressure of about 22 ± 5°C. Spraying was done in a number of passes over the model till the surface shows a smooth coating of about 40 µm thickness. The coating was allowed to cure at temperature of 30°C for 24 hours. A small amount of talc was sprinkled on the coating surface and spread uniformly as a thin layer to protect the coated surface from dust and oil from the airflow in wind tunnel.
The paint coupon (4cm X 3cm) prepared was calibrated in the PSP calibration chamber in the pressure range of 0.10 bar to 1.6 bar as described earlier.

The binary pressure sensitive paint coating on delta wing model exhibited good adhesion after several blowdowns under transonic and supersonic flow conditions.

As described earlier, the thermal aging test and wind tunnel aging tests demonstrate that paint coupons of binary paint formulation with covalently bonded pyrene derivative as described in the present invention are stable and do not suffer from paint degradation.

Thus the present invention provides a stable pressure sensitive paint coating having enhanced shelf-life of two months.

### Advantages of the Invention

The main advantages of the improved binary pressure sensitive paint coating of the present invention are:
- The binary paint coatings of the present invention have low temperature coefficient.
- The binary paint coatings of the present invention are free from paint degradation during wind tunnel experiments.
- The binary paint coatings of the present invention have improved adhesion and enhanced shelf-life.
- The binary paint coatings of the present invention are suitable for application over large areas of model surface.
- The binary paint coatings of the present invention have the rare combination of reasonably high pressure sensitivity, low temperature coefficient, good stability improved adhesion, and enhanced shelf-life of the coating so that they are ideally suitable for getting accurate surface pressure data in transonic and supersonic flow applications.

## Claims

1. A binary pressure sensitive paint coating comprising a stack of layers consisting of a screen layer, an active layer and two adhesive layers, wherein the said first adhesive layer is deposited on a model surface followed by deposition of silicone-titanium dioxide screen layer on the said first adhesive layer, the second adhesive layer being deposited on the said screen layer followed by the deposition of active layer comprising pyrene-end-labelled PDMS on the said second adhesive layer, wherein the said layers are subjected to curing at temperature of 25 to 40°C for a period of 24 to 72 hours, wherein the pyrene end-labelled PDMS is derived from a hydroxyl substituted pyrene of formula py-(CH₂)ₙ-OH, wherein py is pyrene and n is from 1 to 10.

2. A binary pressure sensitive paint coating as claimed in claim 1, wherein the screen layer comprises a mixture of silicone resin and titanium dioxide and has a thickness in the range of 10 to 20 µm.

3. A binary pressure sensitive paint coating as claimed in claim 1 or 2, wherein the adhesive layer comprises silicone primer and has a thickness in the range of 1 to 2 µm.

4. A binary pressure sensitive paint coating as claimed in claim 1, 2 or 3, wherein the active layer has a thickness in the range of 30 to 50 µm.

5. A binary pressure sensitive paint coating as claimed in any one of claims 1 to 4, wherein the pyrene-end-labelled PDMS formulation is obtainable by a method which comprises removing excess dichloromethane by magnetic stirring at controlled temperature of 30 ± 5°C.

## Patentansprüche

1. Binäre drucksensitive Farbbeschichtung umfassend einen Schichtenstapel, der aus einer Schutzschicht, einer aktiven Schicht und zwei Haftschichten besteht, wobei die besagte erste Haftschicht auf einer Modellfläche aufgebracht ist, gefolgt von Aufbringen einer Silikon-Titandioxid-Schutzschicht auf der besagten ersten Haftschicht, wobei die zweite Haftschicht auf der besagten Schutzschicht gefolgt von dem Aufbringen einer aktiven Schicht umfassend am Pyren-Ende markiertes PDMS auf der besagten zweiten Haftschicht aufgebracht wird, wobei die besagten Schichten einem Härten bei einer Temperatur von 25 bis 40 °C für einen Zeitraum von 24 bis 72 Stunden ausgesetzt werden, wobei das am Pyren-Ende markierte PDMS von einem Hydroxyl-substituierten Pyren der Formel py-(CH₂)ₙ-OH abgeleitet ist, wobei py Pyren ist und n von 1 bis 10 ist.

2. Binäre drucksensitive Farbbeschichtung nach Anspruch 1, wobei die Schutzschicht eine Mischung aus Silikonharz und Titandioxid umfasst und eine Stärke im Bereich von 10 bis 20 µm aufweist.

3. Binäre drucksensitive Farbbeschichtung nach einem der Ansprüche 1 bis 2, wobei die Haftschicht eine Silikongrundierung umfasst und eine Stärke im Bereich von 1 bis 2 µm aufweist.

4. Binäre drucksensitive Farbbeschichtung nach einem der Ansprüche 1 bis 3, wobei die aktive Schicht eine Stärke im Bereich von 30 bis 50 µm aufweist.

5. Binäre drucksensitive Farbbeschichtung nach einem der Ansprüche 1 bis 4, wobei die am Pyren-Ende markierte PDMS-Formulierung durch ein Verfahren erhältlich ist, das das Entfernen von überschüssigem Dichlormethan durch magnetisches Rühren bei kontrollierter Temperatur von 30 ± 5 °C umfasst.

## Revendications

1. Revêtement de peinture sensible à la pression binaire comprenant un empilement de couches constituées d'une couche d'écran, d'une couche active et de deux couches adhésives, ladite première couche adhésive étant déposée sur une surface de modèle suivie par le dépôt d'une couche d'écran de dioxyde de silicium et de titane sur ladite première couche adhésive, la deuxième couche adhésive étant déposée sur ladite couche d'écran suivie par le dépôt de la couche active comprenant un PDMS (polydiméthylsiloxane) marqué au pyrène en bout de chaîne sur ladite deuxième couche adhésive, lesdites couches étant soumises au durcissement à une température de 25 à 40 °C pendant une période de 24 à 72 heures, le PDMS marqué au pyrène en bout de chaîne étant dérivé d'un pyrène à substitution hydroxyle de formule py-(CH₂)ₙ-OH, py étant pyrène et n allant de 1 à 10.

2. Revêtement de peinture sensible à la pression binaire tel que défini dans la revendication 1, dans lequel la couche d'écran comprend un mélange de résine de silicone et de dioxyde de titane et présente une épaisseur située dans la plage de 10 à 20 µm.

3. Revêtement de peinture sensible à la pression binaire tel que défini dans la revendication 1 ou 2, dans lequel la couche adhésive comprend un primaire de silicone et présente une épaisseur située dans la plage de 1 à 2 µm.

4. Revêtement de peinture sensible à la pression binaire tel que défini dans la revendication 1, 2 ou 3, dans lequel la couche active présente une épaisseur située dans la plage de 30 à 50 µm.

5. Revêtement de peinture sensible à la pression binaire tel que défini dans l'une quelconque des revendications 1 à 4, dans lequel la formulation de PDMS marqué au pyrène en bout de chaîne peut être obtenue par un procédé qui comprend le retrait de dichlorométhane excédentaire par agitation magnétique à température régulée de 30 ± 5 °C.
